# EUROPÄISCHE PATENTSCHRIFT

(11) **EP 0 607 793 B1**
(45) Veröffentlichungstag und Bekanntmachung des Hinweises auf die Patenterteilung: **12.07.2000**
(21) Anmeldenummer: 94100080.4
(22) Anmeldetag: 05.01.1994
(51) Int. Cl.: B23Q 39/04

(54) **Rundtakt-Werkzeugmaschine**
Rotating machine-tool
Machine-outil rotative

(30) Priorität: 20.01.1993 DE 4301393
(43) Veröffentlichungstag der Anmeldung: 27.07.1994
(73) Patentinhaber: WITZIG & FRANK GmbH, 77652 Offenburg (DE)
(72) Erfinder: Walter, Heinz, D-71272 Renningen (DE); Grau, Wolfgang, D-71034 Böblingen (DE); Heselschwerdt, Helmut, D-71106 Magstadt (DE)
(74) Vertreter: Rüger, Rudolf, Dr.-Ing.

(56) Entgegenhaltungen:
- EP-A- 0 043 584
- EP-A- 0 407 794
- DE-A- 2 804 584
- DE-A- 3 941 480
- FR-A- 1 454 406
- FR-A- 2 190 578
- US-A- 2 181 873
- US-A- 3 552 240
- SOVIET PATENTS ABSTRACTS Section PQ, Week 9107, 3. April 1991 Derwent Publications Ltd., London, GB; Class P56, AN 91-049637 & SU-A-1 570 874 (TEKHNOLOG PRODN MAC) 15. Juni 1990
- PATENT ABSTRACTS OF JAPAN vol. 3, no. 84 (M-66)20. Juli 1979 & JP-A-54 059 680 (TOYODA KOKI K.K.) 14. Mai 1979

## Beschreibung

Die Erfindung betrifft eine Rundtakt-Werkzeugmaschine mit den Merkmalen des Patentanspruches 1.

Aus der DE-AS 1 027 959 ist eine Rundtakt-Werkzeugmaschine mit einem Werkstückträger in Gestalt eines Rundschalttisches für mehrere Arbeitsstationen bekannt. Die an dem Rundschalttisch angeordneten Werkstückaufnahmen können während des Weiterschaltens des Tisches selbsttätig um ihre eigene Achse derart gedreht werden, daß die Werkstücke in den einzelnen Arbeitsstationen parallel zueinander ausgerichtet sind. Neben dem Rundschalttisch sind einzelnen Arbeitsstationen zugeordnete Bearbeitungseinheiten angeordnet, die als mehrspindlige Spindelköpfe ausgebildet sind, deren verschiedene Werkzeuge tragende Arbeitsspindeln auf den Werkstückträger zustellbar sind. Die Anordnung ist dabei derart getroffen, daß in jeder Arbeitsstation mit den in die Arbeitsspindeln des Mehrspindelkopfes eingesetzten Werkzeugen gleichzeitig unterschiedliche Arbeitsoperationen an einer der Zahl der Arbeitsspindeln entsprechenden Zahl von gleichen Werkstücken vorgenommen werden können, die auf am Umfang des Rundschalttisches aufeinanderfolgenden Werkstückaufnahmen gespannt sind. Eine solche Maschine ist jedoch nur für die Bearbeitung spezieller Werkstücke, beispielsweise Fittings, einsetzbar, bei denen verhältnismäßig einfache Bearbeitungsvorgänge auszuführen sind, die so beschaffen sind, daß sie jeweils gruppenweise von den Arbeitsspindeln eines Mehrspindelkopfes erledigt werden können.

Aus der SU-A 1 570 874 ist ein Bearbeitungszentrum bekannt, das einen um eine vertikale Schaltachse drehbaren Schalttisch aufweist, der vier Werkstückaufnahmen trägt. Die Werkstückaufnahmen sind auf dem Schalttisch um jeweils eine zu der Schaltachse parallele vertikale Achse drehbar angeordnet. Der Schaltisch ist in vier Arbeitsstationen weiterschaltbar, wo die Werkstücke gleichzeitig jeweils von vorn, von hinten bzw. von zwei Seiten von den Arbeitsspindeln eines Mehrspindelkopfes bearbeitet werden. Eine Bearbeitung der Ober- bzw. der Unterseite des Werkstückes ist nicht möglich.

Wesentlich universeller einsetzbar ist eine andere aus der DE-PS 2 755 755 bekannte Rundtakt-Werkzeugmaschine, bei der ein um eine Vertikalachse drehbar gelagerter schrittweise weiterschaltbarer Werkstückträger an dem oberen Wandteil eines steifen insich formstabilen geschlossenen Käfigs hängend angeordnet ist, dessen unteres Wandteil nach Art einer Wanne ausgebildet ist und eine mittige Späneabfuhröffnung aufweist. Die Werkstückaufnahmen sind dabei am Umfang des scheibenförmigen Werkstückträgers angeordnet. Die Bearbeitung der darauf gespannten Werkstücke erfolgt durch Arbeitseinheiten, die in den einzelnen Arbeitsstationen von der Seite, von oben und von unten her wirkend angeordnet sind. Die Werkstückaufnahmen sind mit ihren Achsen genau radial zu dem Werkstückträger ausgerichtet, d.h. die Achsen schneiden die vertikale Schaltachse des Werkstückträgers. Ohne zusätzliche Einrichtungen können die in die Seitenwände des Käfigs eingesetzten Arbeitsspindeln die Werkstücke im wesentlichen lediglich von der Stirnseite her bearbeiten. Die Bearbeitung am Umfang übernehmen die von oben und unten her wirkenden Arbeitseinheiten. Grundsätzlich können aber die Arbeitsspindeln einer Arbeitsstation nur das in dieser Arbeitsstation stehende Werkstück bearbeiten; sie können nicht gleichzeitig noch zur Bearbeitung von Werkstücken in benachbarten Arbeitsstationen benutzt werden. Abgesehen davon, kann diese Rundtakt-Werkzeugmaschine prinzipbedingt mit Rücksicht auf die Gehäusegröße nur für die Bearbeitung von Werkstücken eingesetzt werden, deren Abmessungen bestimmte Werte nicht überschreiten.

Außerdem ist aus der EP 0043584 eine Maschine gemäß dem Oberbegriff des Anspruchs 1 bekannt, der einen Schalttisch aufweist, der um eine Horizontalachse drehbar und in vorgegebenen Positionen fixierbar ist. Der Schalttisch weist vier mit ihrer Flächennormale jeweils radial nach außen weisende Flächen auf, an denen Werkstückaufnahmen angeordnet sind. Jeder Werkstückaufnahme ist eine Spindel zugeordnet, die jeweils mit einem Motor dreh- und/oder verstellbar ist, wobei zur genauen Verstellung als Motore, Schrittmotore oder Gleichstrommotore mit Rückmeldung verwendet werden, die eine genaue Lageeinstellung erlauben. Die Drehachsen dieser Werkstückaufnahmen sind radial orientiert und liegen in einer gemeinsamen horizontalen Ebene.

Der Bearbeitungsautomat weist mehrere Bearbeitungsstationen auf, die von den Werkstücken der Werkstückaufnahmen nacheinander durchlaufen werden. Jede Bearbeitungsstation weist wenigstens eine Bearbeitungseinheit mit einem angetriebenen Werkzeug auf, wobei die Bearbeitungseinheiten zu dem Werkstück zustellbar sind.

Aufgabe der Erfindung ist es, eine Rundtakt-Werkzeugmaschine zu schaffen, die bei hoher Flexibilität und kurzer Stückzeiten in den Einsatzmöglichkeiten sich durch eine präzise Bearbeitung auszeichnet und dazu mit verhältnismäßig wenig Arbeitseinheiten auskommt.

Diese Aufgabe wird durch die Rundtakt-Werkzeugmaschine mit den Merkmalen des Patentanspruchs 1 gelöst.

Die neue Rundtakt-Werkzeugmaschine erlaubt es beispielsweise, das auf einer Werkstückaufnahme gespannte Werkstück auf fünf Seiten (vier Umfangsseiten und eine Stirnseite) bzw. beliebig viele Seiten an beispielsweise einem runden Werkstückumfang mit horizontalen Arbeitseinheiten zu bearbeiten, ohne daß das Werkstück umgespannt oder vorübergehend in eine andere Ebene nach oben oder nach unten geschwenkt werden müßte. Damit ist eine hohe Präzision der Bearbeitung gewährleistet, während gleichzeitig eine sehr vielseitige Einsatzmöglichkeit der Maschine für die verschiedenartigsten kompliziert gestalteten Werkstücke möglich ist.
In einer bevorzugten Ausführungsform sind die Arbeitseinheiten auf horizontalen Führungsbahnen horizontal verstellbar gelagert, die parallel oder rechtwinklig zu den Planetenachsen des in einer der Winkelstellungen stehenden Werkstückträgers ausgerichtet sind. Dabei ist es von besonderem Vorteil, wenn wenigstens eine Führungsbahn eine zwei auf dem Werkstückträger in Umfangsrichtung aufeinander folgende Werkstückaufnahmen überdeckende Länge aufweist, derart, daß die Arbeitseinheit mit ihrer Arbeitsspindel wahlweise mit der einen oder mit der anderen der beiden Werkstückaufnahmen zusammenwirkend einstellbar ist. Abhängig von der Art der zu bearbeitenden Werkstücke kann die Anordnung auch derart getroffen sein, daß auf wenigstens einer der Führungsbahnen zwei Arbeitseinheiten nebeneinander angeordnet sind, die unabhängig voneinander ihre Positionier- und Arbeitsbewegungen ausführen.

Somit handelt es sich um eine 2 oder 4 oder 6-Stationen-Rundtisch-Maschine mit 180° bzw. 90° bzw. 60°-Schritt mit 2 oder 4 oder 6 Werkstückträgern mit horizontaler Schwenkachse in tangentialer Anordnung zum Schaltkreis jeweils mit gleichem Abstand zur Schaltmitte, jedoch axial um einen bestimmten Betrag nach außen versetzt, wobei jeweils 2 diametral angeordnete Werkstückträger-Achsen parallel zueinander verlaufen. Dadurch rücken die zu bearbeitenden Werkstücke möglichst weit nach außen und gestatten relativ kurze Werkzeuge und kurze Arbeitswege.

Die Zahl der Arbeitseinheiten kann damit innerhalb des gleichen Bauprinzips und unter Verwendung des gleichen Werkstückträgers weit variert werden. Es können z. Bsp. zwei, drei, vier, fünf oder sechs Bearbeitungseinheiten vorgesehen sein, von denen eine oder mehrere auf "kurzen" Führungsbahnen angeordnet sind, die das Werkstück in einer Arbeitsstation abdecken, während andere Arbeitseinheiten auf "langen" Führungsbahnen gelagert sind, die eine Verstellung der Arbeitseinheit zwischen zwei Arbeitsstationen erlauben. Mit jeder dieser Möglichkeiten kann schließlich auch wenigstens eine Führungsbahn kombiniert werden, auf der nebeneinander, wie erwähnt, zwei Arbeitseinheiten sitzen. Die Arbeitsspindel jeder Arbeitseinheit ist unabhängig von den Arbeitsspindeln der anderen Einheiten. Demgemäß können alle Arbeitsspindeln unabhängig voneinander maßkorrigiert werden, wie auch die zeitliche Aufeinanderfolge der Arbeitsvorgänge an den einzelnen Werkstücken mit Rücksicht auf kurze Stückzeiten zweckentsprechend gestaltet werden kann.

Insbesondere dann wenn die Rundtakt-Werkzeugmaschine zur Bearbeitung größerer Werkstücke eingesetzt werden soll, ist es zweckmäßig, daß die Arbeitseinheiten als Modulen auf eigenen Sockelteilen angeordnet sind, die mit einem den Werkstückträger lagernden Sockel starr verbunden sind. Auf diese Weise läßt sich die Maschine nach Art eines Baukastens aufbauen, indem an den den Werkstückträger lagernden Sockel die für den jeweiligen Einsatzfall erforderliche Art und Zahl von Modulen angeflanscht wird. Jeder dieser Modulen ist selbstständig; er verfügt über eigene Vorschub-, Steuer- und Antriebseinheiten und ist in der Regel mit lediglich einer einzigen Arbeitsspindel ausgerüstet.

Für kleinere Werkstücke kommt eine Ausführung der Rundtakt-Werkzeugmaschine infrage, bei der der Werkstückträger hängend in einem nach Art eines Käfigs ähnlich wie in der DE-PS 2 755 755 ausgebildeten, steifen, formstabilen Gehäuse angeordnet ist, das seitliche Wandteile aufweist, in die die Arbeitseinheiten eingesetzt sind. Dieses Käfig ist mit Vorteil im Querschnitt mehreckig ausgebildet, wobei wenigstens eine der erwähnten horizontalen Führungsbahnen im Bereiche einer ebenen Seitenwand angeordnet ist.

Insbesondere bei dieser Ausführungsform können abhängig von den Bedürfnissen des Einzelfalls auch in wenigstens einer Arbeitsstation zumindest eine von oben und/oder eine von unten her mit vertikaler ausgerichteter Arbeitsspindel wirkende Arbeitseinheiten vorgesehen sein. Bei allen Bauarten ist es im übrigen möglich, daß wenigstens eine der Arbeitseinheiten auch in Vertikalrichtung verstellbar und/oder verschwenkbar gelagert ist. Schließlich kann das Einsatzfeld noch dadurch in einfacher Weise erweitert werden, daß wenigstens eine Arbeitsstation einen der Arbeitsspindel zugeordneten Werkstückrevolver aufweist, der es erlaubt, aufeinander folgend mehrere Werkzeuge an dem Werkstück in Eingriff zu bringen.

Die neue Rundtakt-Werkzeugmaschine ist in der Regel mit einer separaten Ladestation zu versehen, die es erlaubt, während der Bearbeitung der übrigen Werkstücke die in dieser Station stehende Werkstückaufnahme des Werkstückträgers zu be- und entladen. Dabei bietet sich eine problemlose Integration von automatischen Be- und Entladesystemen an. Das Maschinenkonzept zeichnet sich somit nicht nur auch durch einen geringen Platzbedarf, sondern auch durch geringe Personalkosten im Betrieb aus.

In der Zeichnung sind Ausführungsbeispiele des Gegenstandes der Erfindung dargestellt. Es zeigen:
- Fig. 1: eine Rundtaktwerkzeugmaschine gemäß der Erfindung in der Draufsicht in schematischer Darstellung,
- Fig. 2: die Rundtakt-Werkzeugmaschine nach Fig. 1 in einer Seitenansicht,
- Fig. 3 bis 7: die Rundtakt-Werkzeugmaschine nach Fig. 1, jeweils in verschiedenen Ausbaustufen mit unterschiedlicher Zahl von Arbeitseinheiten, in einer Draufsicht entsprechend Fig. 1,
- Fig. 8: eine Rundtakt-Werkzeugmaschine gemäß der Er-findung in einer zweiten abgewandelten Ausführungsform geschnitten längs der Linie VIII-VIII der Fig. 9 in einer Draufsicht und in schematischer Darstellung,
- Fig. 9: die Rundtakt-Werkzeugmaschine nach Fig. 8, geschnitten längs der Linie IX-IX der Fig. 8 in einer Seitenansicht und in schematischer Darstellung und
- Fig. 10 bis 13: die Rundtakt-Werkzeugmaschine nach Fig. 8 in verschiedenen Ausbaustufen mit unterschiedlicher Zahl von Arbeitseinheiten, jeweils in einer Draufsicht und einer schematischen Schnittdarstellung entsprechend Fig. 8.

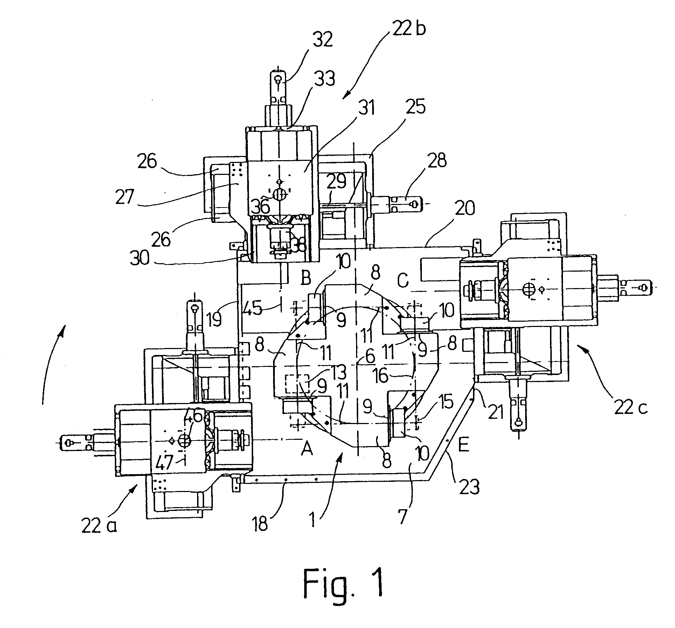

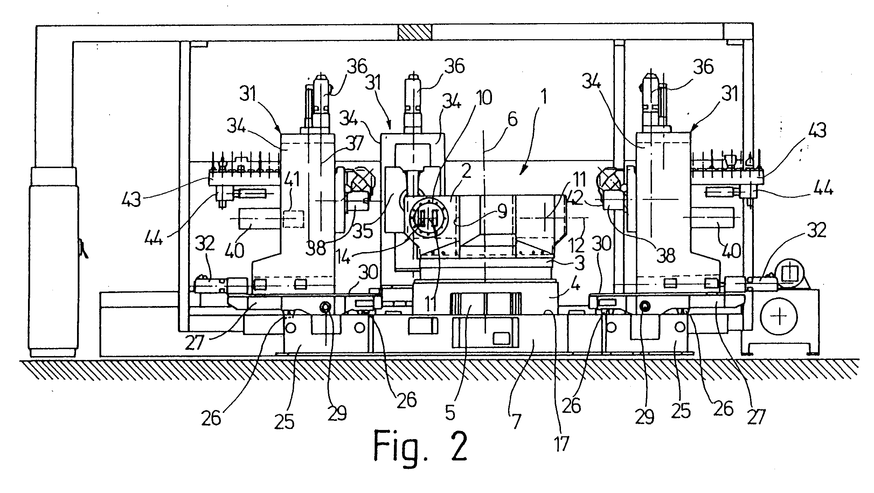

Die in den Fig. 1, 2 dargestellte Rundtakt-Werkzeugmaschine weist einen Werkstückträger 1 auf, der mit einer vierarmigen, kreuzförmigen flachen Konsole 2 ausgebildet ist, die auf einem Rundscnalttisch 3 angeordnet ist, der durch einen in einem Gehäuse 4 untergebrachten, bei 5 angedeuteten Schrittantrieb um eine vertikale Schaltachse 6 schrittweise weiterschaltbar ist. Das Gehäuse oder Untergestell 4 des Rundschalttisches 3 ist auf einem ortsfesten Sockel 7 befestigt, derart, daß der Werkstückträger 1 über den Rundschalttisch 3 um seine vertikale Schaltachse 6 drehbar gelagert ist.

An jedem der jeweils rechtwinklig zueinander verlaufenden vier Arme 8 der Konsole 2 des Werkstückträgers 1 ist im Bereiche einer vertikalen ebenen Seitenfläche 9 (Fig. 1) eine nach Art eines Planetentisches ausgebildete Werkstückaufnahme 10 angeordnet, die um ihre eigene Achse, die Planetenachse 11, drehbar gelagert ist. Die vier Planetenachsen 11 gemäß diesem Ausführungsbeispiel leigen in einer gemeinsamen Horizontalebene 12 (Fig. 2); sie sind jeweils paarweise parallel zueinander ausgerichtet, derart, daß die zueinander parallelen Planetenachsen 11 jedes Paares beidseitig der vertikalen Schaltachse 6 liegen. In der gehäuseartig ausgebildeten Konsole 2 ist für jede der Werkstückaufnahmen 10 eine eigene Planeten-Schaltvorrichtung angeordnet, von denen in Fig. 1 lediglich eine bei 13 schematisch angedeutet ist. Die Planeten-Schaltvorrichtungen 13 erlauben es, die Werkstückaufnahmen 10 programmgesteuert jeweils um 360° um ihre jeweilige Planetenachse 11 zu drehen, wobei abhängig von dem Einsatzzweck diese Drehbewegung kontinuierlich oder schrittweise in vorbestimmten Winkelinkrementen erfolgen kann. Die Planeten-Schaltvorrichtungen 13 sind mit dem Schrittantrieb 5 für den Werkstückträger 1 synchronisiert, so daß die Drehbewegung der Werkstückaufnahmen 13 um ihre Planetenachsen 11 auf die Schaltbewegung des Werkstückträgers 1 um die vertikale Schaltachse 6 zwangsläufig abgestimmt ist.

Die Werkstückaufnahmen 10 tragen für das jeweilige Werkstück geeignete Spannvorrichtungen 14 (Fig. 2), die in der Regel automatisch gesteuert sind und die es gestatten, jeweils ein bei 15 (Fig. 1) angedeutetes Werkstück lagerichtig zu spannen.

Der Schrittantrieb 5 ist so ausgelegt, daß er den Werkstückträger 1 bei jeder Schaltbewegung um jeweils 90° weiterschaltet und während der Bearbeitung der Werkstücke 15 den Werkstückträger 1 in der jeweiligen Winkelstellung ortfest verriegelt.

Da die Werkstückaufnahmen 10 nach außen weisend auf den jeweils diametral paarweise zueinander parallelen vertikalen Seitenflächen 9 der Arme 8 des kreuzartigen Werkstückträgers 1 angeordnet sind, verlaufen ihre Planetenachsen 11 jeweils tangential zu einem gemeinsamen gedachten Kreis 16 um die Vertikalachse 6, der in Fig. 1 gestrichelt eingetragen ist.

Der den Werkstückträger 1 aufnehmende im wesentlichen quaderförmige Sockel 7 weist eine etwa quadratische Grundrißgestalt auf. Er ist auf seiner Oberseite bei 17 (Fig. 2) im wesentlichen eben und als Schweiß- oder Gusskonstruktion ausgebildet, die zur Erzielung hoher Formstabilität im Inneren stark verrippt oder zumindest abschnittsweise zweischalig ausgeführt ist. An die 4 jeweils paarweise parallel zueinander ausgerichteten Seitenflächen 18, 19, 20, 21 (Fig. 1) des Sockels 7 sind Arbeitseinheiten 22 angefügt, die 3 Arbeitsstationen A, B, C definieren, die bei der Ausführungsform nach Fig. 1 mit Arbeitseinheiten 22a, 22b, 22c besetzt sind. Im Bereiche einer seitlichen Abschrägung 23 des Sockels 7 ist eine Be- und Entladestation vorgesehen, die mit E bezeichnet ist.

Jede Arbeitseinheit 22 weist ein eigenes im wesentlichen quaderförmiges Sockelteil 25 auf, das eine horizontale Führungsbahn 26 trägt, auf der ein Schlitten 27 längsverschieblich gelagert ist. Der Schlitten 27 ist mit einer Vorschubeinrichtung 28 gekuppelt, die über eine Antriebsspindel 29 die Stellbewegung auf den Schlitten 27 überträgt.

Auf dem Schlitten 27 ist eine rechtwinklig zu der ersten Führungsbahn 26 ausgerichtete zweite Führungsbahn 30 angeordnet, auf der ein gehäuseartiger Doppelständer 31 verschieblich geführt ist, der mit einem Stellantrieb 32 gekuppelt ist, welcher ihm über eine Stellspindel 33 (Fig. 1) die jeweilige Stell- oder Arbeitsbewegung erteilt.

Zwischen den beiden starr miteinander verbundenen Ständersäulen 34 (Fig. 2) des Doppelständers 31 ist ein Spindelstock 35 vertikal verschieblich geführt, dessen zugeordneter Stellantrieb mit 36 bezeichnet und mit dem Spindelstock 35 über eine bei 37 angedeutete Stellspindel verbunden ist. In dem Spindelstock 35 ist eine exakt horizontal ausgerichtete, präzise gelagerte Arbeitsspindel 38 drehbar gelagert, deren zugeordneter Antrieb bei 40, 41 angedeutet ist.

Die Arbeitsspindel 38 trägt eine Werkzeugspannaufnahme 42; ihr ist ein zwischen den beiden Ständersäulen 34 angeordneter Werkzeugwechsler zugeordnet, der als Balken-Werkzeugwechsler ausgebildet ist und dessen Kettenmagazin bei 43 angedeutet ist. Der Antrieb des Kettenmagazins 43 ist mit 44 bezeichnet. Das Werkzeugmagazin ist jeweils hinter dem Doppelständer 31 vorgesehen, so daß der Bearbeitungsraum vor dem Doppelständer 31 durch das Werkzeugmagazin nicht behindert ist.

Wie beispielsweise aus Fig. 1 zu ersehen, sind drei solcher identisch aufgebauter Arbeitseinheiten 22a, 22b, 22c mit ihren Sockelteilen 25 an die Seitenflächen 19, 20, 21 des Werkstückträgers 1 angeflanscht. Zufolge der speziellen Ausbildung der Sockelteile 25 sowie der Geradführungen 26, 30 verlaufen die Achsen 45 der Arbeitsspindeln 38 einander benachbarter Arbeitseinheiten 22 jeweils genau rechtwinklig zueinander. Außerdem sind die Arbeitsstellungen des Werkstückträgers 1, in denen dieser während der Bearbeitung der Werkstücke 15 exakt lagerichtig gegen den Sockel 7 fixiert ist, so justiert, daß in jeder Arbeitsstation A, B, C die Arbeitsspindelachse 45 der zugehörigen Arbeitseinheit 22 exakt rechtwinklig oder parallel zu der Planetenachse 11 der in dieser Arbeitsstation stehenden Werkstückaufnahme 10 orientiert ist.

Ein Blick auf die Fig. 1, 2 zeigt außerdem, daß der Raum oberhalb des Werkstückträgers 1 frei ist, und daß die Werkstückaufnahmen 10 mit den darauf gespannten Werkstücken 15 auch von der Seite her gut zugänglich sind. Die ebene Oberfläche 17 des Sockels 7, die auch muldenförmig gestaltet sein kann, erlaubt gleichzeitig eine leichte Abfuhr der anfallenden Späne.

Im Betrieb wird jeweils an der Be- und Entladestation E ein bearbeitetes Werkstück 15 gegen ein unbearbeitetes Werkstück auf der in dieser Station stehenden Werkstückaufnahme 10 ausgetauscht. Bei der anschließenden Schaltbewegung um 90° wird das unbearbeitete Werkstück von dem Werkstückträger 1 in die Arbeitsstation A überführt, in der mittels der in das Spannfutter 42 der Arbeitsspindel 38 eingesetzten Werkzeuge das Werkstück 15 an allen vier Seiten seines Umfanges oder auch an beliebig vielen Seiten seines bspw. runden Werkstückumfanges bearbeitet werden kann. Dazu bringt der Planeten-Schaltantrieb 13 das Werkstück für jeden Bearbeitungsvorgang in die richtige Position, indem er es um die zugehörige Planetenachse 11 entsprechend verdreht und in der erreichten Position sodann lagefest fixiert.

Grundsätzlich sind auch Drehoperationen möglich, bei denen das Werkstück 15 von der dann kontinuierlich angetriebenen Werkstückaufnahme 10 in Umdrehung versetzt ist. Zusätzlich kann das Werkstück 15 auch eine Planbearbeitung auf seiner Stirnseite erfahren, ohne daß dazu die Aufspannung des Werkstückes verändert werden müßte.

Nach Abschluß der Bearbeitung in dieser Arbeitsstation wird das Werkstück um 90° durch den Werkstückträger 1 in die zweite Arbeitsstation B überführt, in der entsprechende Arbeitsoperationen vorgenommen werden, an die sich eine Bearbeitung in der nachfolgenden Bearbeitungsstation C anschließt, worauf das Werkstück bei der vierten Schaltbewegung des Werkstückträgers 1 wieder in der Be- und Entladestation E ankommt.

Bei den Bearbeitungsvorgängen in den einzelnen Arbeitsstationen A bis C sind die Arbeitsspindeln 38 völlig unabhängig voneinander gesteuert; sie können Bewegungen parallel und rechtwinklig zu der jeweiligen Planetenachse 11 in der Horizontal- und in der Vertikalebene ausführen. In Sonderfällen bei Bearbeitung besonders komplizierter Werkstücke wäre es auch denkbar, den Spindelstock 35 beispielsweise über den Doppelständer 31 um eine Vertikalachse 46 (Fig. 1) verdrehbar oder zwischen den Ständersäulen 34 um eine Horizontalachse 47 (Fig. 1) schwenkbar auszuführen.

Während der bei in den Fig. 1, 2 dargestellten einfachsten Ausbaustufe jeder der Arbeitsstationen A, B, C jeweils eine einzige Arbeitseinheit 22 zugeordnet ist, deren zu der Planetenachse der in dieser Arbeitsstation stehenden Werkstückaufnahme 10 genau parallele erste Führungsbahn 26 lediglich eine solche Länge hat, daß sie es der Arbeitsspindel 38 erlaubt, die Abmaße des entsprechenden Werkstückes 15 zu überdecken, kann die Rundtakt-Werkzeugmaschine ohne großen Aufwand und ohne Änderung der Grundkonzeption baukastenartig erweitert werden, um damit den jeweiligen Einsatzzwecken gerecht zu werden.

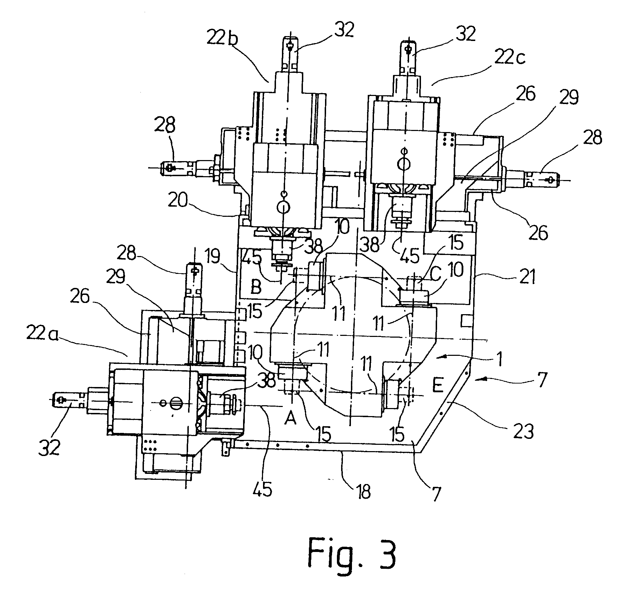

Verschiedene Ausführungsformen solcher erweiterter Ausbaumöglichkeiten sind in den Fig. 3 bis 7 veranschaulicht.

Diese Figuren sollen lediglich einen Überblick über die Flexibilität der Einsatzmöglichkeiten des neuen Maschinenkonzepts geben, ohne daß sie dabei einen Anspruch auf Vollständigkeit aller Ausbaumöglichkeiten erheben. Gleiche Teile sind in diesen Figuren jeweils mit gleichen Bezugszeichen versehen; die bereits anhand der Fig. 1 und 2 erläuterten Teile sind nicht nochmals erklärt.

Bei der in Fig. 3 dargestellten Ausführungsform sind an die Seitenwände 19, 20 des den Werkstückträgers 1 aufnehmenden Sockels 7 drei Bearbeitungseinheiten 22 angeflanscht, von denen drei Arbeitsstationen A, B, C definiert sind. Während die Arbeitseinheit 22a in der Arbeitsstation A ähnlich wie in Fig. 1 ausgebildet und angeordnet ist, sind die beiden Arbeitseinheiten 22b, 22c nebeneinander liegend gemeinsam mit ihren Sockelteilen 25 an der Seitenwand 20 des Sockels 7 angeflanscht, so daß ihre Arbeitsspindeln 38 achsparallel sind. Die ersten Führungsbahnen 26 können für beide Arbeitseinheiten 22b, 22c gemeinsam durchgehend sein; sie können aber auch für jede Arbeitseinheit getrennt sein.

Während die beiden Arbeitseinheiten 22a, 22b mit den Achsen 45 ihrer Arbeitsspindeln 38 jeweils rechtwinklig zu der Planetenachse der in diesen Arbeitsstationen A, B stehenden Werkstückaufnahmen 10 ausgerichtet sind, ist die Achse 45 der Arbeitsspindel 38 der Arbeitseinheit 22c in der Arbeitsstation C parallel zu der Planetenachse der zugeordneten Werkstückaufnahme 10 orientiert.

Eine solche Anordnung kann zweckmäßig sein, wenn es darauf ankommt in der Arbeitsstation C insbesondere von der Stirnseite des Werkstücks 15 her Bearbeitungsvorgänge an diesem vorzunehmen. Die Bearbeitung am Umfang des Werkstückes 15 erfolgt überwiegend in den vorhergehenden Arbeitsstationen A, B. Eine zusätzliche Arbeitseinheit an der Seite 21 des Sockels 7 ist in diesem Falle mit Rücksicht auf das speziell bearbeitete Werkstück 15 nicht erforderlich.

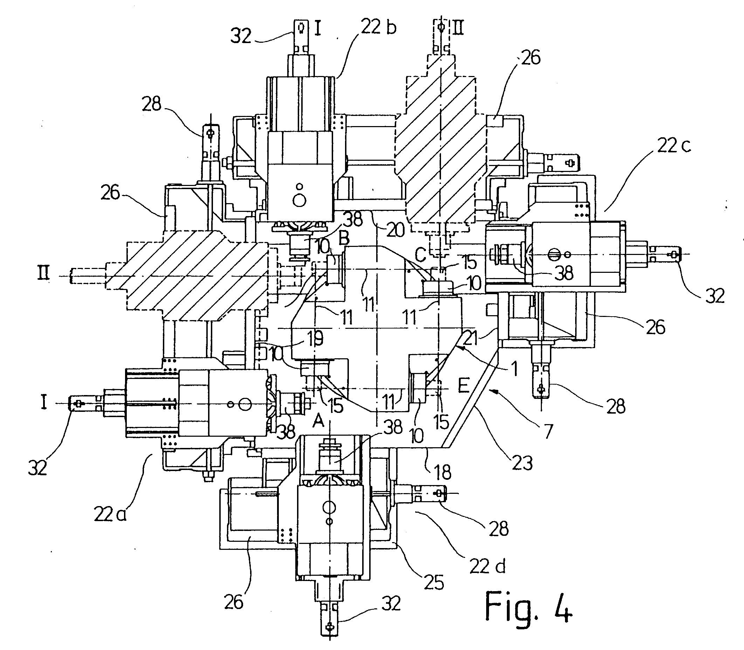

Die Ausbaustufe nach Fig. 4 entspricht einer Rundtakt-Werkzeugmaschine wie sie grundsätzlich in Fig. 1 dargestellt ist, mit dem Unterschied jedoch, daß zusätzlich eine weitere Arbeitseinheit 22d mit ihrem Sockelteil 25 an die Seitenwand 18 des gemeinsamen Sockels 7 angeflanscht ist.

Außerdem sind die an die Seitenwände 19, 20 angefügten Arbeitseinheiten 22a, 22b mit einer doppelt langen ersten Führungsbahn 26 ausgebildet, deren Länge so bemessen ist, daß diese horizontale Führungsbahn jeweils zwei auf dem Werkstückträger 1 in Umfangsrichtung aufeinander folgende Werkstückaufnahmen 10 überdeckt, derart, daß die Arbeitseinheit 22a oder 22b mit ihrer Arbeitsspindel 38 wahlweise mit dem Werkstück 15 auf der einen oder auf der anderen der beiden Werkstückaufnahmen 10 zusammen arbeiten kann.

In Fig. 4 sind diese beiden möglichen Arbeitsstellungen I und II der Arbeitsspindel 38 der beiden Arbeitseinheiten 22a, 22b dadurch veranschaulicht, daß jeweils eine der Arbeitsstellungen (II) gestrichelt veranschaulicht ist.

Wie ein Blick auf Fig. 4 zeigt kann das Werkstück 15 ohne Änderung der Aufspannung und ohne daß es hoch- oder abgeklappt würde bei jeder der vier möglichen Stellungen des Werkstückträgers 1 in der Arbeitsstation A, B und C sowohl am Umfang als auch von der Stirnseite her, d.h. mit einer Arbeitsspindel 38, deren Achse 45 rechtwinklig bzw. parallel zu der jeweiligen Planetenachse 11 verläuft, bearbeitet werden. Damit ist in einer einzigen Station eine echte fünf-Seitenbearbeitung des Werkstückes möglich. Da jede der Arbeitseinheiten 22a bis 22d unabhängig ist und individuell gesteuert werden kann, läßt sich auf diese Weise ein sehr hohes Maß an Flexibilität der Einsatzmöglichkeiten erzielen.

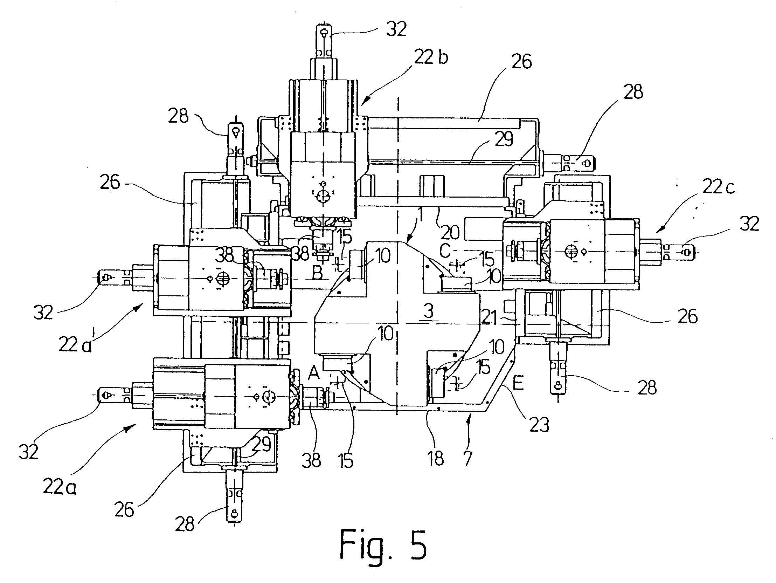

Die bei der Ausführungsform nach Fig. 5 veranschaulichte Ausbaustufe unterscheidet sich von jener nach Fig. 4 lediglich darin, daß an die der Be- und Entladestation E benachbarte Seitenwand 18 des gemeinsamen Sockels 7 keine Arbeitseinheit 22 angesetzt ist, während auf der "langen" durchgehenden ersten Führungsbahn 26 der Arbeitsstation A zwei Bearbeitungsstationen 22a, 22a' sitzen, von denen jede einen eigenen Stellantrieb 28 aufweist, der es erlaubt die beiden Arbeitseinheiten unabhängig voneinander zu verstellen.

Das in der Bearbeitungsstation B stehende Werkstück 15 kann damit durch die Arbeitseinheiten 22a' und 22b gleichzeitig bearbeitet werden (5-Seitenbearbeitung). Anschließend kann die Arbeitseinheit 22b in die Arbeitsstation C überführt werden, um dort mit der Bearbeitungseinheit 22c das Werkstück ebenfalls am Umfang und von der Stirnseite her zu bearbeiten.

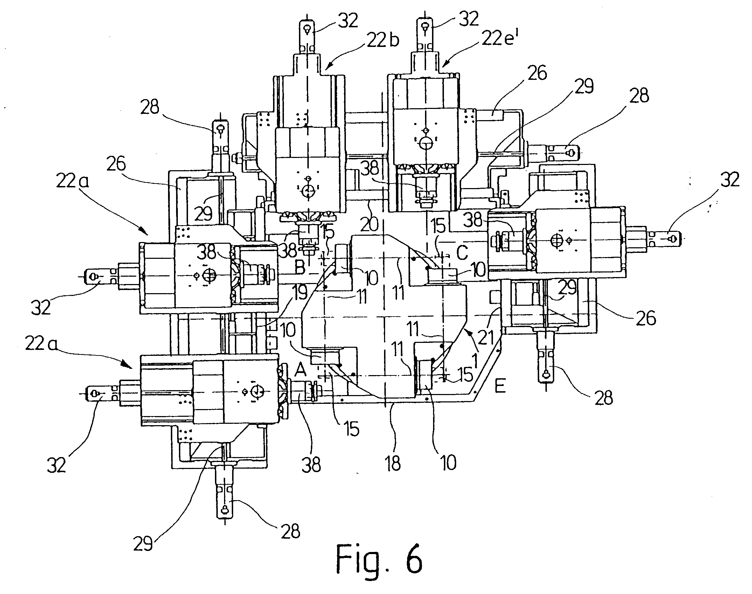

Die in Fig. 5 veranschaulichte Ausbaustufe der neuen Rundtakt-Werkzeugmaschine ist in Fig. 6 in der Weise erweitert, daß der Bearbeitungseinheit 22b auf der ersten "langen" Führungsbahn 26 eine zweite Bearbeitungseinheit 22b' zugesellt ist, die es erlaubt, das Werkstück auch in der Arbeitsstation C gleichzeitig mit der Umfangsbearbeitung durch die Arbeitseinheit 22c von der Stirnseite her zu bearbeiten. Dadurch ist erreicht, daß für die stirnseitige Bearbeitung des Werkstückes in der Arbeitsstation C nicht abgewartet werden muß, bis die Arbeitseinheit 22b ihren Arbeitszyklus in der Arbeitsstation B an dem Werkstück 15 beendet hat und damit für den Transfer in die Arbeitsstation C zur Verfügung steht.

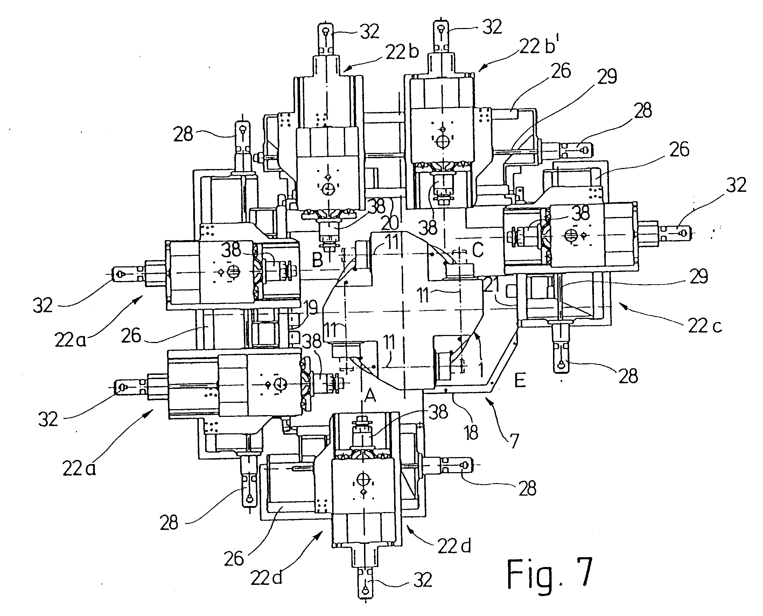

Fig. 7, schließlich, zeigt die neue Rundtakt-Werkzeugmaschine in der höchsten Ausbaustufe mit sechs Arbeitseinheiten 22, die an allen vier Seitenwänden 18, 19, 20, 21 des Sockels 7 angeflanscht sind. Dabei sind die Arbeitseinheiten 22a,a' und 22b,b' jeweils auf einer "langen" ersten horizontalen Führungsbahn 26 angeordnet, während die beiden restlichen Arbeitseinheiten 22c und 22d über "kurze" erste horizontale Führungsbahnen 26 verfügen, die den horizontalen Arbeitsbereich der Arbeitsspindel 38 auf die durch die Abmessungen des Werkstückes 15 bestimmten räumlichen Gegebenheiten begrenzen. In diesem Zusammenhang sei erwähnt, daß es für Sonderfälle abhängig von der Werkstückgestaltung auch grundsätzlich denkbar wäre, die Arbeitseinheiten 22c und/oder 22d mit einer langen ersten Führungsbahn 26 auszurüsten. Damit würde die Möglichkeit eröffnet auch in der Be- und Entladestation E anschließend an den Be- und Entladevorgang das Werkstück 15 bearbeiten zu können. Die bei einer solchen Ausführung auftretende Beschränkung des an der Be- und Entladestation E für den eigentlichen Be- und Entladevorgang zur Verfügung stehenden Platzes kann gegebenenfalls insbesondere dann in Kauf genommen werden, wenn automatische Be- und Entladevorrichtungen verwendet werden, die mit geringem Platzbedarf arbeiten und an dieser Stelle keine Sicherheitsabstände etc. für Bedienungspersonen erforderlich machen.

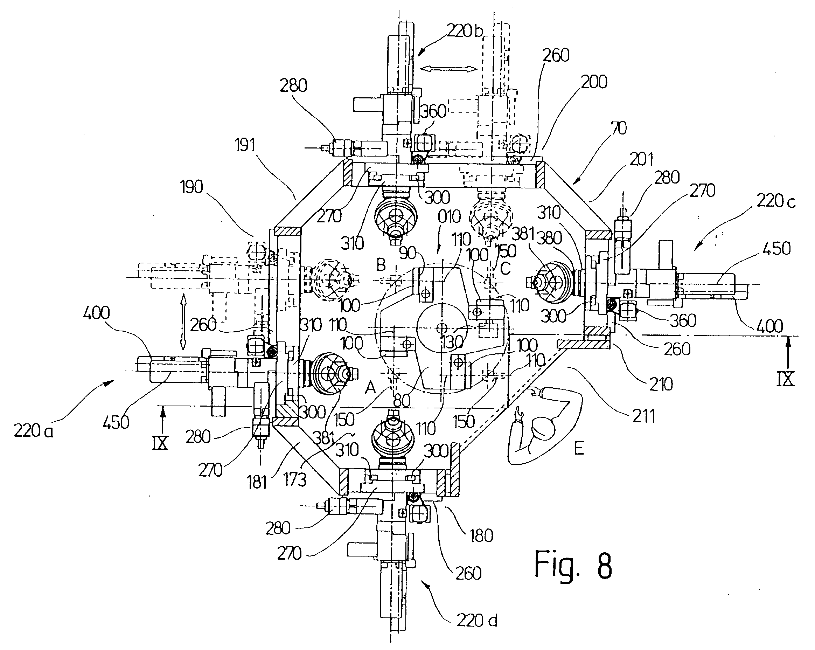

In den Fig. 8 bis 13 ist die neue Rundtakt-Werkzeugmaschine in verschiedenen Ausbaustufen in einer Ausführungsform veranschaulicht, wie sie insbesondere für die Bearbeitung kleinerer Werkstücke infrage kommt. Gleiche Teile wie bei der bereits erläuterten Ausführungsform nach den Fig. 1 bis 7 sind mit gleichen Bezugszeichen versehen, wobei zur Unterscheidung lediglich die Ziffer "0" hinzugefügt ist. Auf eine nochmalige Erläuterung des Aufbaus und der Funktion dieser Teile wird - soweit entbehrlich - verzichtet.

Während bei der Ausführungsform nach den Fig. 1 bis 7 der Werkstückträger 1 auf dem Sockel 7 angeordnet ist, an dessen Seitenwände 18, 19, 20, 21, die als selbständige Modulen ausgebildeten Arbeitseinheiten 22 entsprechend der jeweiligen Ausbaustufe seitlich angeflanscht sind, ist bei der Ausführungsform nach den Fig. 8 bis 13 ein einheitliches Gehäuse 70 vorgesehen, in dessen Innenraum der Werkstückträger 010 hängend angeordnet ist, während die ebenfalls als Modulen ausgebildeten Arbeitseinheiten 220 ringsum den Werkstückträger 010 verteilt in den jeweiligen Arbeitsstationen A, B, C in entsprechende Seitenwände des Gehäuses 70 eingesetzt sind. Die prinzipielle Funktion der Rundtakt-Werkzeugmaschinen ist in beiden Ausführungsformen gleich.

Das im Querschnitt (Fig. 8) mehreckige Gehäuse 70 ist nach Art eines Käfigs mit vier jeweils paarweise zueinander parallelen ebenen Seitenwandteilen 180, 190 200, 210 ausgebildet, zwischen denen Einrichtöffnungen 181, 191, 201 vorgesehen sind, so daß sich ein bis auf die Einrichtöffnungen und eine Bedienungsöffnung 211 in der Be- und Entladestation E ringsum im wesentlichen geschlossenes Polygon ergibt. Auf die Seitenwandteile 180, 190, 200 und 210 ist eine im wesentlichen ebene obere Wand 170 aufgesetzt, während die erwähnten Seitenwandteile unten auf einer Bodenwand 171 aufsitzen, mit der sie starr verbunden sind. Die Bodenwand 171 weist eine mittige kreisrunde Späneabfuhröffnung 172 auf, die ringsum durch einen Späneabfuhrtrichter 173 begrenzt ist, der einen Teil der Bodenwandkonstruktion bilden kann und zur Versteifung des Ganzen beiträgt.

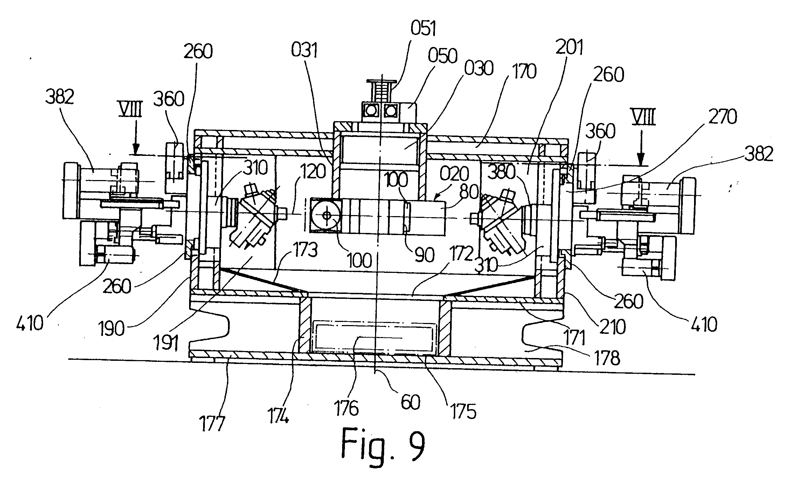

Die Seitenwandteile 180, 190, 200 und 210 sowie die obere Wand 170 und die Bodenwand 171 sind stark verrippt und/oder zweischalig, wie in Fig. 9 dargestellt und Teile einer einheitlichen Schweißkonstruktion, die das käfigartige Gehäuse 70 bildet. Das käfigartige Gehäuse 70 zeichnet sich durch eine große Steifigkeit und Formstabilität aus. Es ist so bemessen, daß die bei der Bearbeitung der Werkstücke in den einzelnen Arbeitsstationen A, B, C auftretenden Reaktionskräfte in dem Gehäuse 70 selbst aufgenommen werden, so daß keine Kraftaufnahme durch einen Maschinenständer oder andere zur Abstützung des Gehäuses 70 auf der Aufstellfläche vorgesehene Konstruktionselemente erfolgt. Bei dem dargestellten Ausführungsbeispiel dient zur Aufstellung des Gehäuses 70 in der erforderlichen Arbeitshöhe eine hohle Mittelsäule 174, die koaxial zu der die Schaltachse 60 bildenden vertikalen Mittelachse angeordnet ist und deren Innenraum mit der Späneabfuhröffnung 172 in Verbindung steht. Durch eine entsprechende seitliche Öffnung 175 unterhalb der Bodenwand 171 erfolgt seitlich der Späneabtransport durch einen Späneförderer 176 (Fig. 9).

Zwischen der Mittelsäule 174, der Bodenplatte 171 und einer Fußplatte 177 sternförmig angeordnete schmale Rippen 178 gewährleisten eine kippsichere Verbindung des Gehäuses 70 mit der Mittelsäule 174.

Anstelle der Mittelsäule 174 könnten auch randseitig an der Bodenwand 171 angeordnete Aufstellfüße oder entsprechende Abstützelemente verwendet werden; es wäre sogar denkbar, das Gehäuse 70 an einer ensprechenden Tragkonstruktion aufzuhängen und damit den Raum unterhalb der Bodenwand 171 ganz frei zu halten.

Der Werkstückträger 010 weist eine vierarmige kreuzförmige Konsole 020 auf, die gleich wie die Konsole 2 der Fig. 1, 2 aufgebaut ist und die auf den paarweise zueinander parallelen Seitenflächen 90 der Arme 80 die nach Art von Planetentischen ausgebildeten Werkstückaufnahmen 100 trägt.

Die Planetenachsen 110 der Werkstückaufnahmen 100 verlaufen wiederum tangential im radialen Abstand zu der vertikalen Schaltachse 60; sie sind paarweise zueinander parallel ausgerichtet und liegen in einer gemeinsamen horizontalen Ebene 120 (Fig. 9). Jeder Werkstückaufnahme 100 ist ein Antrieb 130 zugeordnet, wie er in Fig. 8 für eine Werkstückaufnahme 100 angedeutet ist. Die Antriebe 130 erlauben es, programmgemäß jede Werkstückaufnahme 100 getrennt für sich kontinuierlich oder in vorgegebenen Inkrementen um die zuhörige Planetenachse 110 zu verdrehen.

Die Konsole 020 hängt an einem Schalttisch 030, der in einem mit der oberen Wand 170 verbundenen zylindrischen Gehäuse 031 angeordnet ist, das gleichzeitig die radiale Führung der Konsole 020 übernimmt. Der aufgesetzte zugehörige Schaltantrieb ist bei 050 veranschaulicht. Bei 051 ist ein zugeordneter Drehwinkelgeber für die Winkelstellung der Konsole 020 angedeutet.

In den ebenen, beidseitig der vertikalen Schaltachse 60 paarweise parallel einander gegenüber liegenden seitlichen Wandteilen 180, 190, 200, 210 sind jeweils erste horizontale Führungsbahnen 260 ausgebildet, die entsprechende Öffnungen in den Wandungsteilen oben und unten begrenzen. Auf jeder der horizontalen ersten Führungsbahnen 260 ist ein Schlitten 270 horizontal verstellbar gelagert, der vertikale Führungsbahnen 300 trägt, auf denen ein Querschlitten 310 vertikal verstellbar geführt ist. In eine entsprechende Durchgangsöffnung des Querschlittens 310 ist die modulartig aufgebaute Arbeitseinheit 220 mit horizontaler Spindelachse 450 eingesetzt.

Jede Arbeitseinheit 220 weist eine in einer Pinole gelagerte Arbeitsspindel 380 auf, die einen auf die Pinole aufgesetzten Werkzeug-Revolverkopf 381 trägt, der bei der dargestellten Ausführungsbeispiel als Sternrevolverkopf mit einer unter 45° zu der Spindelachse 450 verlaufenden Revolver-Schaltachse ausgebildet ist.

Der Stellantrieb für den Axialvorschub der Pinole und des Revolverkopfes 381 ist mit 410 bezeichnet. Der Spindelantrieb erfolgt über eine Antriebseinheit 382. Die Stellvorrichtungen für die Horizontalverstellung des Schlittens 270 und für die Vertikalverstellung des Querschlittens 310 sind mit 280 und 360 bezeichnet.

Entsprechend wie bei der Ausführungsform nach den Fig. 1 bis 7 ist in jeder der Arbeitsstationen A, B, C eine 5-Seitenbearbeitung des Werkstückes 150 möglich, ohne daß dazu eine Umspannung des Werkstückes erforderlich wäre. Die Spindelachse 450 der in der jeweiligen Arbeitsstation stehenden Arbeitseinheit 220 verläuft rechtwinklig oder parallel zu der Planetenachse 110, der in dieser Arbeitsstation stehenden Werkstückaufnahme 100. Der Werkstückträger 010 ist durch seinen Schrittantrieb jeweils wieder um 90° um die Schaltachse 60 verdrehbar und in seiner jeweils erreichten Winkelstellung ortfest fixierbar.

Bei der in Fig. 8 dargestellten Ausführungsform ist eine Ausbaustufe veranschaulicht, bei der in die Seitenwandteile 180, 190, 200 und 210 jeweils eine Arbeitseinheit 220a, 220b, 220c, 220d eingesetzt ist. Die horizontalen ersten Führungsbahnen 260 der Arbeitseinheiten 220a, 220b sind so lang ausgebildet, daß die Arbeitseinheit zwischen zwei am Umfang des Werkstückträgers 010 benachbarten Werkstückaufnahmen 100 wahlweise hin und her verschoben werden kann, wie dies in Fig. 8 durch Pfeile und eine gestrichelte Umrißdarstellung der Arbeitseinheit veranschaulicht ist. Diese Arbeitseinheiten 220a, 220b können deshalb die in den Arbeitsstationen A, B und C stehenden Werkstücke 150 zusammen mit den diesen Arbeitsstation zugeordneten anderen Arbeitseinheiten 220d, 220c fünfseitig bearbeiten. Die horizontalen ersten Führungsbahnen 260 der anderen Arbeitseinheiten 220c, 220d sind dabei "kurz" gewählt, d.h. ihre Länge reicht aus, um die Arbeitsspindel 380 mit dem Revolverkopf 381 über die Abmaße des auf der in der jeweiligen Arbeitsstation stehenden Werkstückaufnahme 100 gespannten Werkstückes 150 zu bewegen.

Die in dem Revolverkopf 381 gespannten Werkzeuge können in jeder Arbeitsstation zusätzlich über den Querschlitten 310 vertikal bewegt und über den Pinolenantrieb der Arbeitsspindel 380 auf das Werkstück zugestellt und von diesem zurückgefahren werden.

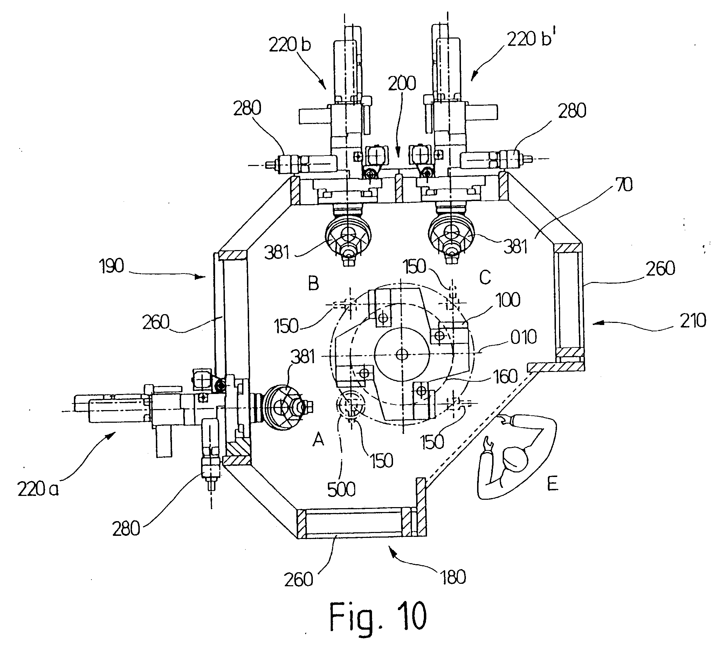

Die in Fig. 10 dargestellte Ausführungsform der Rundtakt-Werkzeugmaschine unterscheidet sich von der Ausführungsform nach den Fig. 8, 9 durch eine vereinfachte Ausbaustufe. Es sind lediglich drei Arbeitseinheiten 220a, 220b und 220b' vorgesehen, von denen die Arbeitseinheit 220a ähnlich wie in Fig. 8 auf einer langen ersten horizontalen Führungsbahn 260 horizontal so weit verstellbar ist, daß ein Werkstück 150 sowohl in der Bearbeitungsstation A (am Umfang) als auch in der Bearbeitungsstation B (von der Stirnseite her) bearbeiten kann.

Die beiden Arbeitseinheiten 220b, 220b' sind jeweils auf einer "kurzen" ersten horizontalen Führungsbahn 260 verstellbar; sie dienen zur Bearbeitung der Werkstücke 150 in den beiden benachbarten Bearbeitungsstationen B und C in der aus Fig. 10 ersichtlichen Weise.

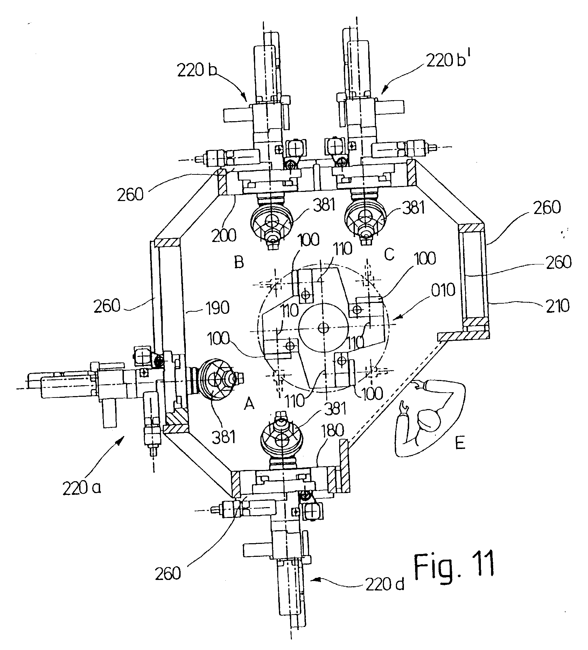

Bei der anhand der Ausführungsform nach Fig. 11 gezeigten Ausbaustufe ist die Anordnung der Arbeitseinheiten 220 ähnlich wie bei der Ausführungsform nach Fig. 10 getroffen. Es ist lediglich die Arbeitseinheit 220d der Fig. 8 in den Wandteil 180 eingesetzt. Demgemäß können in der Arbeitsstation A die Werkstücke 150 sowohl von der Stirnseite als auch vom Umfang her bearbeitet werden - was im gleichen Maße auch für die Werkstücke 150 in der Arbeitsstation B gilt - während in der Arbeitsstation C eine Bearbeitung der Werkstücke 150 lediglich von der Stirnseite her erfolgt.

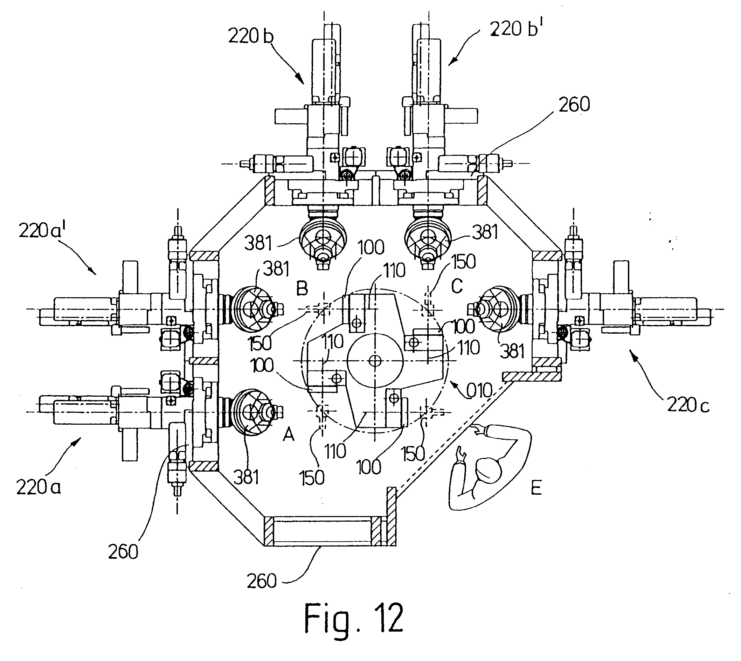

Die anhand der Fig. 12 veranschaulichte Ausbaustufe ist so getroffen, daß in die Seitenwandteile 190, 200 mit "kurzen" ersten Führungsbahnen 260 jeweils zwei Arbeitseinheiten 220a, 220a' und 220b, 220b' eingesetzt sind.

Die Art der hier zu bearbeitenden Werkstücke 150 ist so, daß in Arbeitsstation A lediglich eine Bearbeitung vom Umfang her erfolgt, während in den nachfolgenden Arbeitsstationen B, C die Werkstücke 150 jeweils von der Stirnseite und vom Umfang her mit eigenen Arbeitseinheiten 220a', 220b; 220b', 220c bearbeitet werden.

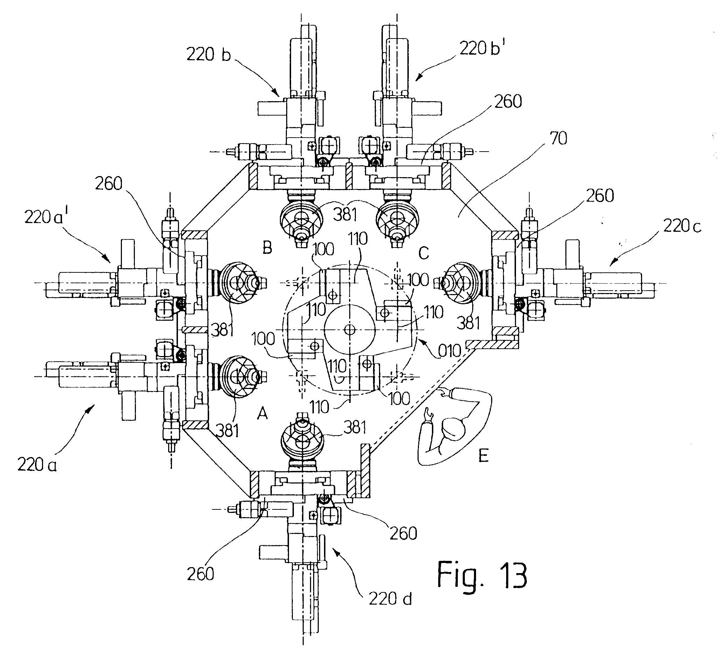

Schließlich zeigt Fig. 13 die vollständigste Ausbaustufe mit sechs Arbeitseinheiten. Alle Arbeitseinheiten 220a, 220a' bzw. 220b, 220b' bzw. 220c und 220d sind in die jeweils zugeordneten Seitenwandteile eingesetzt, die mit kurzen ersten Führungsbahnen 260 ausgerüstet sind, welche lediglich mit Rücksicht auf die Abmessungen des zu bearbeitenden Werkstücks 150 bemessen sind.

In jeder der Arbeitsstationen A, B, C ist in diesem Fall eine Bearbeitung der Werkstücke 150 am Umfang und von der Stirnseite her durch eigene Arbeitseinheiten möglich, so daß sich besonders kurze Stückzeiten ergeben und ein Höchstmaß an Flexibilität in der Einsatzmöglichkeit gewährleistet ist.

Die konstruktiven Einzelheiten des prinzipiellen Aufbaus der Arbeitseinheiten 220 sind in der DE-PS 39 41 480 beschrieben. Wie dort erläutert können falls dies mit Rücksicht auf die besondere Bauart der zu bearbeitenden Werkstücke 150 erforderlich ist, noch zusätzlich bei allen geschilderten Ausbaustufen weitere Arbeitseinheiten 220 an den einzelnen Arbeitsstationen A, B, C in die ebene horizontale obere Wand 170 oder in die ebenfalls horizontale untere Wand 171 eingesetzt werden, um damit noch weitere Bearbeitungsachsen zu schaffen. Ähnlich wie bei der Ausführungsform nach den Fig. 1 bis 7 können einzelne Arbeitseinheiten auch um eine horizontale oder vertikale Achse schwenkbar gelagert sein.

Bei den erläuterten Ausführungsformen der neuen Rundtakt-Werkzeugmaschine wurde von einem Werkstückträger 1 bzw. 010 ausgegangen, der vierarmig aufgebaut ist und demgemäß vier Werkstückaufnahmen 10 bzw. 100 trägt. Grundsätzlich wäre es auch denkbar, die Rundtakt-Werkzeugmaschine mit einer abweichenden Zahl von Arbeitsstationen zu konstruieren und einen Werkstückträger zu verwenden, der nicht vier sondern mehr oder weniger (bspw. zwei oder sechs) Werkstückaufnahmen 10 bzw. 100 aufweist. In jedem Fall sind aber die Planetenachsen 11 bwz. 110 der Werkstückaufnahmen im radialen Abstand tangential zu der vertikalen Schaltachse 6 bzw. 60 ausgerichtet und in wenigstens einer horizontalen Ebene liegend angeordnet. Die Arbeitseinheiten 22, 220 sind in der Regel echte 3-Achsen-Einheiten.

## Patentansprüche

1. Rundtakt-Werkzeugmaschine,
mit einem um eine vertikale Schaltachse (6; 60) drehbar gelagerten und durch einen Schrittantrieb schrittweise weiterschaltbaren Werkstückträger (1; 010), der in einzelnen Arbeitsstationen (A, B, C) entsprechenden Winkelstellungen ortsfest verriegelbar ist,
mit Werkstückaufnahmen (10; 100), die an dem Werkstückträger (1; 010) auf paarweise in entgegengesetzten Richtungen orientierten Flächen des Werkstückträgers angeordnet und um ihre jeweilige Achse, die Planetenachse (11; 110), drehbar gelagert und durch Schalt- oder Antriebsmittel (13; 130) um die jeweilige Planetenachse verdrehbar und in bestimmten Bearbeitungspositionen fixierbar sind,
wobei die Planetenachsen (11; 110) der Werkstückaufnahmen (1; 010) in wenigstens einer horizontalen Ebene liegen,
mit Arbeitsstationen (22; 220), die den einzelnen Arbeitsstationen (A, B, C) zugeordnet und seitlich des Werkstückträgers (1; 010) angeordnet sind und die jeweils zumindest eine in Richtung auf den Werkstückträger (1; 010) zustellbare Arbeitsspindel (38, 380) tragen,
dadurch gekennzeichnet,
dass der Werkstückträger (1; 010) Arme (8) mit Seitenflächen (9) aufweist,
dass die Werkstückaufnahmen (10; 100) an diesen Seitenflächen (9) der Arme (8) angeordnet sind, wobei die Planetenachsen (11; 110) Tangenten an einen gedachten Kreis (16) bilden.

2. Rundtakt-Werkzeugmaschine nach Anspruch 1, dadurch gekennzeichnet, daß die Arbeitseinheiten (22; 220) auf horizontalen Führungsbahnen (26; 260) horizontal verstellbar gelagert sind, die parallel oder rechtwinklig zu den Planetenachsen (11; 110) des in einer der Winkelstellungen stehenden Werkstückträgers (1; 010) ausgerichtet sind.

3. Rundtakt-Werkzeugmaschine nach Anspruch 2, dadurch gekennzeichnet, daß wenigstens eine Führungsbahn (26; 260) eine zwei auf dem Werkstückträger (1; 010) in Umfangsrichtung aufeinander folgende Werkstückaufnahmen (10; 100) überdeckende Länge aufweist, derart, daß die Arbeitseinheit (22; 220) mit ihrer Arbeitsspindel (38; 380) wahlweise mit der einen oder mit der anderen der beiden Werkstückaufnahmen zusammen wirkend einstellbar ist.

4. Rundtakt-Werkzeugmaschine nach Anspruch 2 oder 3, dadurch gekennzeichnet, daß auf wenigstens einer der Führungsbahnen (26; 260) zwei Arbeitseinheiten (22; 220) nebeneinander angeordnet sind, die vorzugsweise unabhängig voneinander verstellbar sind.

5. Rundtakt-Werkzeugmaschine nach einem der vorhergehenden Ansprüche, dadurch gekennzeichnet, daß wenigstens eine der Arbeitseinheiten (22; 220) in Vertikalrichtung verstellbar gelagert ist.

6. Rundtakt-Werkzeugmaschine nach einem der vorhergehenden Ansprüche, dadurch gekennzeichnet, daß wenigstens eine der Arbeitseinheiten (22; 220) verschwenkbar gelagert ist.

7. Rundtakt-Werkzeugmaschine nach einem der vorhergehenden Ansprüche, dadurch gekennzeichnet, daß in wenigstens einer Arbeitsstation (A, B, C) zumindest eine mit vertikal ausgerichteter Arbeitsspindel (38; 380) von oben oder von unten her wirkende Arbeitseinheit (22; 220) angeordnet ist.

8. Rundtakt-Werkzeugmaschine nach einem der vorhergehenden Ansprüche, dadurch gekennzeichnet, daß die Arbeitseinheiten (22) als Modulen auf eigenen Sockelteilen (25) angeordnet sind, die mit einem den Werkstückträger (1) lagernden Sockel (7) starr verbunden sind.

9. Rundtakt-Werkzeugmaschine nach einem der Ansprüche 1 bis 7, dadurch gekennzeichnet, daß der Werkstückträger (010) hängend in einem nach Art eines Käfigs ausgebildeten steifen, formstabilen Gehäuse (70) angeordnet ist, das seitliche Wandteile (180, 190, 200, 210) aufweist, in die die Arbeitseinheiten (220) eingesetzt sind.

10. Rundtakt-Werkzeugmaschine nach den Ansprüchen 2 und 9, dadurch gekennzeichnet, daß das Käfig im Querschnitt mehreckig ausgebildet ist und wenigstens eine Führungsbahn (260) im Bereiche einer ebenen Seitenwand (180, 190, 200, 210) angeordnet ist.

11. Rundtakt-Werkzeugmaschine nach einem der vorhergehenden Ansprüche, dadurch gekennzeichnet, daß wenigstens eine Arbeitsstation (A, B, C) einen der Arbeitsspindel (380) zugeordneten Werkzeugrevolverkopf (381) aufweist.

## Claims

1. Rotating machine tool,
with a workpiece carrier (1; 010) which is rotatably mounted about a vertical switching shaft (6; 60) and can be advanced in steps by a stepping drive, and which can be locked stationary in angular positions corresponding to individual work stations (A, B, C),
with workpiece holders (10; 100) which on the workpiece carrier (1; 010) are disposed on surfaces of the workpiece holder which are oriented in pairs in opposing directions, wherein these workpiece holders are rotatably mounted about their respective shaft, the planet shaft (11; 110), and can be rotated by switching or drive means (13; 130) about the respective planet shaft and can be fixed in specific processing positions,
the planet shafts (11; 110) of the workpiece holders (1; 010) lying in at least one horizontal plane,
with work stations (22; 220) which are associated with the individual work stations (A, B, C) and are disposed at the side of the workpiece carrier (1; 010) and which each bear at least one working spindle (38, 380) which can be moved in the direction towards the workpiece carrier (1; 010),
characterised in
that the workpiece carrier (1; 010) has arms (8) with lateral faces (9),
that the workpiece holders (10; 100) are disposed on these lateral faces (9) of the arms (8), the planet shafts (11; 110) forming tangents to an imaginary circle (16).

2. Rotating machine tool as claimed in Claim 1, characterised in that the working units (22; 220) are mounted so as to be horizontally adjustable on horizontal guideways (26; 260) which are aligned parallel or at right angles to the planet shafts (11; 110) of the workpiece carrier (1; 010) which is in one of the angular positions.

3. Rotating machine tool as claimed in Claim 2, characterised in that at least one guideway (26; 260) has a length which covers two workpiece holders (10; 100) which succeed one another in the circumferential direction on the workpiece carrier (1; 010) in such a way that the working unit (22; 220) can be selectively adjusted with its working spindle (38; 380) so as to co-operate with one or the other of the two workpiece holders.

4. Rotating machine tool as claimed in Claim 2 or 3, characterised in that two working units (22; 220), which are preferably adjustable independently of one another, are disposed adjacent to one another on at least one of the guideways (26; 260).

5. Rotating machine tool as claimed in one of the preceding claims, characterised in that at least one of the working units (22; 220) is mounted so as to be adjustable in the vertical direction.

6. Rotating machine tool as claimed in one of the preceding claims, characterised in that at least one of the working units (22; 220) is mounted so as to be pivotable.

7. Rotating machine tool as claimed in one of the preceding claims, characterised in that at least one working unit (22; 220) which acts from above or from below and has a vertically aligned working spindle (38; 380) is disposed in at least one work station (A, B, C).

8. Rotating machine tool as claimed in one of the preceding claims, characterised in that the working units (22) are disposed as modules on their own base parts (25) which are rigidly connected to a base (7) bearing the workpiece carrier (1).

9. Rotating machine tool as claimed in one of Claims 1 to 7, characterised in that the workpiece carrier (010) is disposed so that it is suspended in a rigid inherently stable housing (70) which is constructed like a cage and has lateral wall parts (180, 190, 200, 210) into which the working units (220) are inserted.

10. Rotating machine tool as claimed in Claims 2 and 9, characterised in that the cage is of polygonal construction in cross-section and at least one guideway (260) is disposed in the region of a planar side wall (180, 190, 200, 210).

11. Rotating machine tool as claimed in one of the preceding claims, characterised in that at least one work station (A, B, C) has a tool turret (381) associated with the working spindle (380).

## Revendications

1. Machine-outil rotative comprenant
un porte-pièces (1; 010) qui est monté tournant autour d'un axe (6, 60) vertical, peut être déplacé pas à pas par un moyen d'entraînement pas à pas, et peut être verrouillé stationnaire dans des positions angulaires adaptées, dans différentes stations de travail (A, B, C),
des moyens de réception de pièce (10, 100) qui sont disposés sur des surfaces du porte-pièce orientées deux à deux dans des directions opposées, sont montés tournants autour de leur axe, axe planétaire (11,100), peuvent être mis en rotation autour de l'axe planétaire concerné à l'aide de moyens de commande ou d'entraînement (13, 130) et peuvent être immobilisés dans des positions d'usinage déterminées,
les axes planétaires (11,110) des moyens de réception de pièce (10, 100) étant situés dans au moins un plan horizontal,
des unités de travail (22, 220) qui sont associées aux différentes stations de travail (A, B, C), sont disposées sur le côté du porte-pièces (1, 010) et comportent chacune au moins une broche de travail (38, 380) déplaçable en direction du porte-pièces (1, 010)
caractérisé par le fait
que le porte-pièces (1, 010) comporte des bras (8) avec des surfaces latérales (9),
que les moyens de réception de pièce (10, 100) sont disposés sur lesdites surfaces latérales (9) desdits bras (8), les axes planétaires (11, 100) étant tangents à un cercle (16) imaginaire.

2. Machine-outil rotative selon la revendication 1, caractérisée par le fait que les unités de travail (22, 220) sont montées mobiles dans la direction horizontale sur des moyens de guidage (26, 260) horizontaux qui sont disposés parallèlement ou perpendiculairement aux axes planétaires (11, 110) du porte-pièces (1, 010), dans l'une des positions angulaires.

3. Machine-outil rotative selon la revendication 2, caractérisée par le fait qu'au moins un moyen de guidage (26, 260) présente une longueur qui couvre deux moyens de réception de pièce (10, 100) consécutifs sur le porte-pièces (1, 010), dans la direction périphérique, de telle sorte que l'unité de travail (22, 220) avec sa broche de travail (38, 380) puisse être réglée de manière sélective pour coopérer avec l'un ou l'autre des moyens de réception de pièce (10,100).

4. Machine-outil rotative selon la revendication 2 ou 3, caractérisée par le fait que, sur au moins un des moyens de guidage (26, 260), deux unités de travail (22, 220) sont disposées l'une à côté de l'autre, lesquelles unités de travail, de préférence, peuvent être déplacées indépendamment l'une de l'autre.

5. Machine-outil rotative selon une des revendications précédentes, caractérisée par le fait qu'au moins une des unités de travail (22, 220) est montée mobile dans la direction verticale.

6. Machine-outil rotative selon une des revendications précédentes, caractérisée par le fait qu'au moins une des unités de travail (22, 220) est montée pivotante.

7. Machine-outil rotative selon une des revendications précédentes, caractérisée par le fait qu'au moins une station de travail (A, B, C) comporte au moins une unité de travail (22, 220) avec une broche de travail (38, 380) verticale qui agit par le haut ou par le bas.

8. Machine-outil rotative selon une des revendications précédentes, caractérisée par le fait que les unités de travail (22, 220) sont disposés en tant que modules sur des éléments de socle (25) propres qui sont liés rigidement à un socle (7) supportant le porte-pièces (1).

9. Machine-outil rotative selon une des revendications 1 à 7, caractérisée par le fait que le porte-pièces (010) est monté suspendu dans un bâti (70) rigide, indéformable, agencé sous forme de cage, qui comporte des éléments de paroi (180, 190, 200, 210) dans lesquels sont montées les unités de travail (220).

10. Machine-outil rotative selon les revendications 2 et 9, caractérisée par le fait que la cage, en section transversale, est polygonale et qu'au moins un moyen de guidage (260) est disposé dans la région d'une paroi latérale (180, 190, 200, 210) plane.

11. Machine-outil rotative selon une des revendications précédentes, caractérisée par le fait qu'au moins une station de travail (A, B, C) comporte une tourelle porte-outils revolver associée à la broche de travail (380).
